# EUROPEAN PATENT APPLICATION

(11) **EP 1 758 041 A1**
(43) Date of publication of application: **28.02.2007**
(21) Application number: 05018214.6
(22) Date of filing: 22.08.2005
(51) Int. Cl.: G06F 21/00

(54) **A method for enabling the use of an interactive program system**

(71) Applicant: SIEMENS AKTIENGESELLSCHAFT, 80333 München (DE)
(72) Inventor: Väisänen, Jaakko, 91052 Erlangen (DE)

(57) **Abstract**

A method for enabling the use of an interactive program system (201, 203, 205) comprises the steps of 1) generating a sublicense (SUBL) for a computing station (103), the sublicense (SUBL) identifying the computing station (103) and another computing station (101); 2) verifying the sublicense (SUBL), comprising the steps of: i) verifying the validity of the sublicense (SUBL); and ii) verifying that the other computing station (101) has a valid main license (MAINL); and 3) enabling the interactive program system (201, 203, 205) to be used interactively between the computing station (103) and the other computing station (101) if the main license (MAINL) and the sublicense (SUBL) are valid.

## Description

### Field of the invention

The invention relates to program products that can be used interactively on at least two computing stations.

### Background art

The continuously improving properties of computing stations, in particular of mobile computing stations such as personal digital assistants, notebooks or mobile telephones, have increased the users' interest in using a computing station interactively with another computing station. Developing software for implementing interactive program systems can be very challenging, especially because of the large number of different kinds of computing stations on the market with competing industrial standards, and because of advanced system properties of particular computing stations, together with the requirements they set to the software.

Because of their technical complexity and market considerations, program products that form parts of a interactive program system may be very expensive. Having invested resources in development work, many software manufacturers cannot afford offering their software free of charge. A more common trend seems to be that software has no copy protection but can be freely copied, and that using the software then requires a valid license.

A practical problem to be encountered may be that when a user of a computing station has installed a program product that should form a part of an interactive program system, a potential partner with whom the user would want to use the interactive program system may not want to buy a license for the software product. This can cut down the number of actual partners, and in order for such a software product to successfully penetrate into the market the number of licenses sold should be relatively high in order to gain popularity among users so that partners can be found without too much effort. Unless the critical mass is obtained, the success of a software product that should form a part of an interactive program system may remain very low.

A solution to overcome the problem has been presented in European patent application number 04007212.6, not laid open to public at the date of filing.

### Summary of the invention

An objective of the invention is to make interactive program system more appealing to users and to software manufacturers.

This objective can be achieved with a method as set out in claim 1, with a program product as set out in claim 7, with an interactive program system as set out in claim 8, and with a computing station as set out in claim 9.

The dependent claims describe various advantageous embodiments of the invention.

### Advantages of the invention

If a method for enabling the use of an interactive program system comprises the steps of 1) generating a sublicense for a computing station, the sublicense identifying the computing station and another computing station, 2) verifying the sublicense, and 3) enabling the interactive program system to be used interactively between the computing station and the other computing station if the main license and the sublicense are valid, whereby the step of verifying the sublicense comprises the steps of i) verifying the validity of the sublicense, and ii) verifying that the other computing station has a valid main license, the use of the interactive program system can be enabled also on a computing station that has a sublicense only, provided that the main license on the other computing station is valid. Because the use of the interactive computing system at the computing station is enabled for interactive use between the computing station and the other computing station only, the program manufacturer may trust that the sublicense on the computing station cannot be used independently, i.e. without another computing station than the other computing station.

If the step of generating the sublicense is performed in the other computing station, a practical way to monitor the distribution of the sublicenses may be obtained, likewise the user of the other computing station that has a valid main license may be in a better position to control with whom he or she will be using the interactive program system.

Preferably, in the step of verifying the sublicense, the computing station and the other computing station exchange messages to identify themselves. The exchange of messages can be performed through a network, in which case network authentication may be used to reduce fraud.

### List of drawings

In the following, the invention will be described in more detail with reference to examples shown in accompanying drawings in Figures 1 to 4, of which:
Figure 1 shows two computing stations that can be used to execute program products that form an interactive program system;
Figure 2 illustrates a possibility for generating a sublicense;
Figure 3 illustrates a scenario where the validity of the sublicense and the main license is verified at the computing station; and
Figure 4 illustrates a scenario where the validity of the sublicense and the main license is verified in network.

Same reference numerals refer to same structural elements throughout the Figures.

### Detailed description

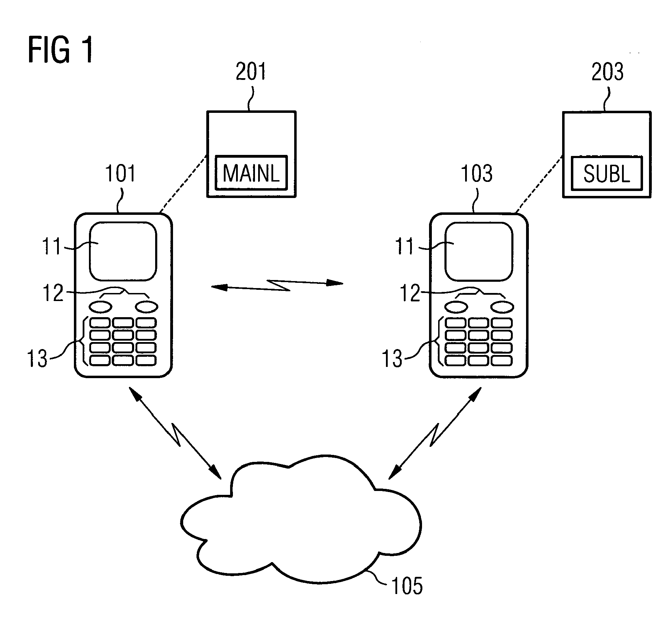

Figure 1 shows two computing stations 101, 103. Both computing stations 101 and 103 comprise at least one visual output unit 11, such as a display, a data input unit 13, such as a keypad, and functional input unit 12, such as keys to accept or reject a selection.

The two computing stations 101, 103 may communicate with each other wirelessly either directly using a direct wireless communication unit or through a network 105 using a network communication unit. The two computing stations 101, 103 have at least one processing unit each.

The processing unit of a computing station 101, 103 can be adapted to execute software code of a program product 201 or 203. Together or with even further program products, the program products 201 and 203 form an interactive program system that can be used interactively between the computing station 101 and the computing station 103, and possibly with further computing stations as well.

If the program product 203 that should form a part of the interactive program system cannot find a valid main license MAINL installed in the computing station 103, the interactive program system, preferably the program products 201 and 203, checks whether there is a valid main license MAINL in the other computing station 101.

In an exemplary use scenario, the computing station 101 has a main license MAINL for the program product 201 installed, whereas the computing station 103 has a sublicense SUBL only for the program product 203. Preferably, the sublicense SUBL enables using the program product 203 on computing station 103 only, and even this provided that there is a valid main license MAINL for the program product 201 on the computing station 101.

In order to install the sublicense SUBL onto the computing station 103, the computing station 101 together with the program product 201 of the interactive program system generates a sublicense SUBL identifying both the computing station 101 and the other computing station 103. The sublicense SUBL is transmitted to the computing station 103, and it enables the computing station 103 to execute the interactive program system preferably with the computing station 101 only.

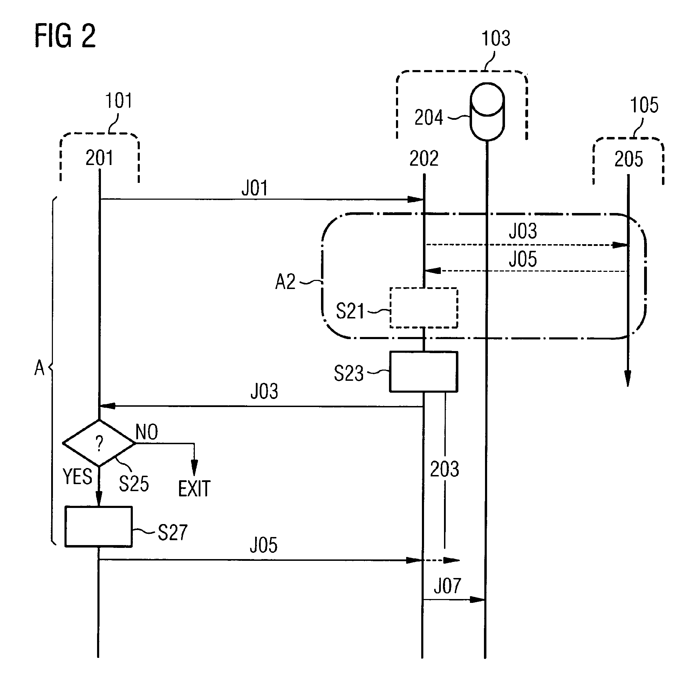

Figure 2 illustrates a possibility for generating a sublicense SUBL. The program product 201 on computing station 101 sends message J01 to computing station 103 that passes the message J01, preferably with a globally unique address identifier, to service 202 that can be a daemon-like program monitoring incoming messages. Service 202 announces that program product 201 is available on computing station 101, and that it would be possible to have program product 203 on computing station 103.

The dash-dotted box shows some actions A₂ that can be performed on the computing station 103 in response to receiving message J01 if the program product 201 has not been installed to computing station 202. Service 202 may then request information from a service 105 in the network 105 by sending request J03 to the network 105. The response J05 may comprise information on the interactive program system, installation information for program product 203, or pricing information. If interested, the user or the service 202 may in step S21 install the program product 203.

In step S23, the service 202 or the program product 203 may respond with message J03 to the program product 201 that the program product 203 is available at the computing station 103.

In step S25, the program product 201 may examine whether the response J03 is valid, or whether the user of computing station 101 really wants to give a sublicense to computing station 103.

In step S27, the sublicense SUBL may be generated at computing station 101, after which the computing station 101 sends it in message J05 to service 202 or to program product 203 which then stores (message J07) it to a local data storage 204.

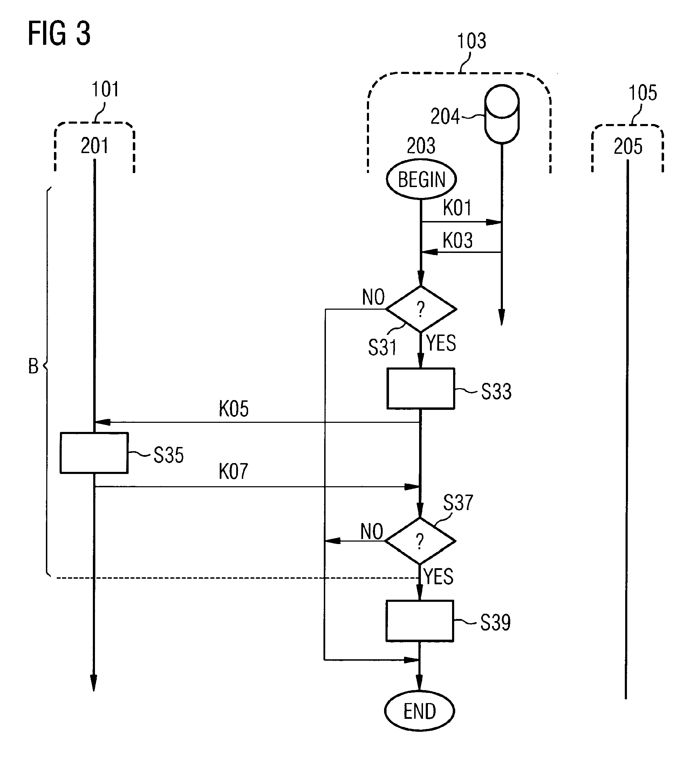

Figure 3 illustrates a scenario where the validity of the sublicense SUBL and the main license MAINL is verified at the computing station 103.

Upon starting the program product 203 at the computing station 103, the program product 203 requests a sublicense SUBL from the storage 204 by sending a request K01. The storage 204 returns the license in its response K03.

In step S31 the program product S31 checks whether the sublicense SUBL is valid. If not, the execution of the program product 203 may be terminated. If yes, in step S33 the execution of the program product 203 can be continued by generating a challenge K05. The challenge K05 may be sent to the computing station 101 which passes the challenge K05 to program product 201 which generates a challenge response in step S35 and sends the challenge response in message K07 to the computing station 103.

In step S37 the computing station 103 checks whether the challenge response in message K07 was valid. If not, the execution of the program product 203 may be terminated. If yes, in step S39 using the program product 203 interactively at the computing station 103 between the computing station 103 and the other computing station 101 is enabled.

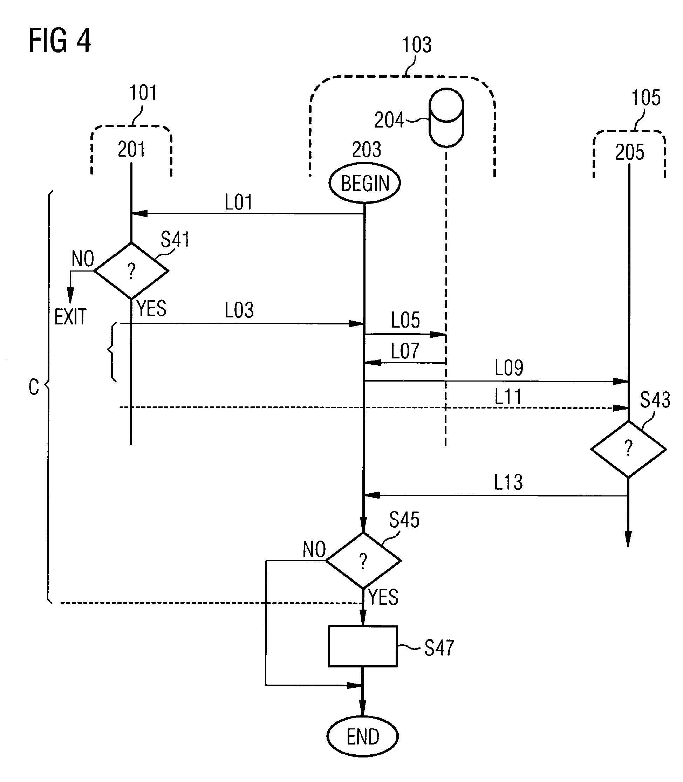

Figure 4 illustrates a scenario where the validity of the sublicense SUBL and the main license MAINL is verified in the network 105.

Upon starting the program product 203 at the computing station 103, the program product 203 sends a message L01 comprising a challenge to the computing station 101 which passes it to the program product 201. The message L01 preferably comprises an identifier identifying the computing station 103 so that the program product 201 can in step S41 check whether the identifier is valid. If not, the execution may be terminated. If yes, the challenge response may be sent in message L03 to the computing station 103.

The program product 203 requests a sublicense SUBL from the storage 204 by sending a request L05. The storage 204 returns the sublicense SUBL in its response L07.

Then the program product 203 requests the computing station 103 to send in message L09 the challenge response comprised in message L03 and a challenge response computed with the certificate stored in storage 204. Instead of the computing station transmitting the challenge response comprised in message L03, the challenge response may be sent to the network 105 by the computing station 101.

The service 205 in network 105 checks the validity of the challenge responses and if both are valid, the service 205 responds with a positive acknowledgement L13.

In step S45 the program product 203 checks whether a positive acknowledgement L13 has been received. If not, the execution of the program product 203 is terminated. If yes, the program product 203 is enabled to be used interactively between the computing station 103 and the other computing station 101.

The invention is not limited to games but can be used with any program product that requires application-specific interaction between the computing stations 101, 103, i.e. applications that can be shared. Examples of such applications comprise applications like Microsoft Netmeeting.

The computing stations 101, 103 can be mobile telephones or PDAs, or any other devices which suitable communication facilities and at least one processing unit.

An alternative solution is that a licence may define e.g. a number of maximal players allowed for the license. Then it would be enough for the applications in different devices to check that there is at least one application that has a valid license.

## Claims

1. A method for enabling the use of an interactive program system (201, 203, 205), **comprising the steps of:**
- generating a sublicense (SUBL) for a computing station (103), the sublicense (SUBL) identifying the computing station (103) and another computing station (101);
- verifying the sublicense (SUBL), comprising the steps of:
i) verifying the validity of the sublicense (SUBL); and
ii) verifying that the other computing station (101) has a valid main license (MAINL); and
- enabling the interactive program system (201, 203, 205) to be used interactively between the computing station (103) and the other computing station (101) if the main license (MAINL) and the sublicense (SUBL) are valid.

2. A method according to claim 1, **wherein:** the step of generating the sublicense (SUBL) is performed in the other computing station (101).

3. A method according to claim 1 or 2, **wherein:** in the step of verifying the sublicense (SUBL), the computing station (103) and the other computing station (101) exchange messages (K05, K07; L01, L03, L09, L11) to identify themselves.

4. A method according to claim 3, **wherein:** the exchange of messages (K05, K07; L01, L03, L09, L11) is performed through a network (105).

5. A method according to claim 3 or 4, **wherein:** the messages (K05, K07; L01, L03, L09, L11) comprise globally unique address identifiers.

6. A method according to any one of the preceding claims, **wherein:** the step of verifying the sublicense (SUBL) is performed at the computing station (103).

7. A program product (203) for an interactive program system (201, 203, 205), **comprising:** software means adapted, when executed in at least one processing unit, to carry out the method steps of any one of the preceding claims.

8. An interactive program system (201, 203, 205), **comprising:**
a program product (203) according to claim 7.

9. A computing station (103), especially a mobile telephone, a notebook or a personal digital assistant, **comprising:** a program product according to claim 7, or an interactive program system according to claim 8.

10. A method, a program product (203), an interactive program system (201, 203, 205) or a computing station according to any one of the preceding claims, **wherein:** the interactive program system (201, 203, 205) is a program system for providing at least one entertainment service, especially a game.
